# EUROPÄISCHE PATENTSCHRIFT

(11) **EP 0 584 592 B1**
(45) Veröffentlichungstag und Bekanntmachung des Hinweises auf die Patenterteilung: **01.05.1996**
(21) Anmeldenummer: 93112455.6
(22) Anmeldetag: 04.08.1993
(51) Int. Cl.: B60R 16/02

(54) **Zentraleinheit**
Central unit
Unité centrale

(30) Priorität: 17.08.1992 DE 4227182
(43) Veröffentlichungstag der Anmeldung: 02.03.1994
(73) Patentinhaber: Delphi Automotive Systems Deutschland GmbH, D-42369 Wuppertal (DE)
(72) Erfinder: Brinkschulte, Ralf, Dipl-Ing, 42117 Wuppertal (DE); Gresch, Peter, Dipl.-Ing, D-65185 Wiesbaden (DE); Scharf, Volker, Dipl.-Ing., D-65428 Rüsselsheim (DE)
(74) Vertreter: Priebisch, Rüdiger

(56) Entgegenhaltungen:
- EP-A- 0 135 910
- EP-A- 0 209 072
- EP-A- 0 497 198
- DE-A- 2 821 992
- DE-A- 3 903 818
- DE-C- 4 221 898

## Beschreibung

Die Erfindung betrifft eine Zentraleinheit für die Verdrahtung von Kraftfahrzeugen mit einem isolierenden Trägerkörper zur Aufnahme von mit elektrischen Leitungen verbundenen Steckkontakten von unten, wobei der Trägerkörper aus zwei oder mehreren Teilträgerkörpern besteht, die miteinander von einem Grundkörper umfaßt sind oder miteinander einen Grundkörper bilden, und mit von oben in den Trägerkörper und/oder den Grundkörper einsteckbaren elektrischen Bauteilen.

Aus der EP-A-0 135 910 (B1) ist ein zentraler Stromverteiler bekannt, dessen einzelne Teilträgerplatten nach Art eines Puzzles zu einer Trägerplatte zusammengefügt werden. Durch einen solchen Stromverteiler ist ein hoher Vorfertigungsgrad von Kabelbäumen für Kraftfahrzeuge möglich. Hieraus ergibt sich eine leichte, schnelle und sichere Endmontage im Kraftfahrzeug. Durch Verwendung verschiedener Steckmodule können unterschiedliche Varianten eines Kraftfahrzeugtyps berücksichtigt werden. Aus der Patentschrift sind außerdem Steckmodule bekannt, die über mehrere Teilträgerplatten verlaufen und über eine elektrische Steckverbindung mit diesen Teilträgerplatten verbunden sind. Nachteilig ist dabei, daß diese Module ihrerseits anschließend mit elektrischen Bauteilen, z.B. Relais und Sicherungen, bestückt werden. Der Umfang des Stromverteilers wächst und die Wahrscheinlichkeit, daß Kontaktschwierigkeiten auftreten, steigt. Das Bordnetz eines Kraftfahrzeuges arbeitet auf unterschiedlichen Leistungsebenen, so daß in einem zentralen Stromverteiler diese Größen auf engstem Raum verarbeitet werden müssen. Häufig werden Relais mit unterschiedlich belasteten Spulenanschlüssen und Schaltkontakten in dieselbe Platine eingesetzt.

Der Erfindung liegt deshalb die Aufgabe zugrunde, einen Teil der Schaltkreise mit unterschiedlichen Leistungsebenen störungsunempfindlich und service-freundlich in einen zentralen Stromverteiler zu integrieren.

Diese Aufgabe wird durch die im Anspruch 1 definierte Zentraleinheit gelost. Das Kontaktsteckbild wird in mehrere Segmente aufgetrennt, die durch Zusammensetzen der komplementären Teilträgerkörper das komplette Anschlußbild ergeben. Die mit höheren Leistungen belasteten Anschlüsse werden modular in einem Teilträgerkörper angeordnet, an den ausschließlich die Kontakte eines elektrischen Bauteils oder eines Kabelsatzes angeschlossen werden, die auf vergleichbar hohen Leistungsebenen arbeiten. Die niedrig belasteten Anschlüsse sind i.d.R. auf gedruckten Schaltungskarten angeordnet, die separat in einem Teilträgerkörper befestigt sind. Die Spulenanschlüsse eines Relais werden folglich an einem Elektronik-Teilträgerkörper kontaktiert, während die lasttragenden Schaltkontakte an einem entsprechenden Teilträgerkörper angeschlossen werden. Zwischen den Spulenanschlüssen und den Schaltkontakten eines Relais existiert keine Verbindungsleitung. Zur Schaffung sinnvoller Einheiten können mehrere Leistungsebenen in einem Teilkörperträger zusammengefaßt werden. Es wird also vermieden, daß prinzipiell unterschiedliche Leistungsebenen an einem Teilträgerkörper liegen. Die Leistungsebenen werden getrennt, sowohl räumlich als auch elektrisch.

Trotz der Integration der unterschiedlich belasteten Schaltkreise in die zentraleinheit und folglich die räumliche Aufteilung in Teilträgerkörper entsteht ein kompakter und übersichtlicher Aufbau. Bisherige gesonderte aufsteckbare Elektronikmodule sind nun in den Gesamtkomplex der Zentraleinheit eingegliedert, so daß sich nur die ohnehin aufsteckbaren Bauteile von der Zentraleinheit abheben. Im Falle einer Reparatur- oder Wartungsmaßnahme wird der entsprechende Teilträgerkörper entnommen und ein neuer Körper eingesetzt. Der Zusammenbau einer Zentraleinheit ist denkbar einfach, da verschiedenartige geometrische Formen der Teilträgerkörper einen Falschzusammenbau nicht ermöglichen. Durch die Auswechselung von Teilträgerplatten können verschiedene elektrische Ausstattungen von verschiedenen Varianten eines Kraftfahrzeugtyps berücksichtigt werden.

Vorteilhafte Ausbildungen der Erfindung sind in den Unteransprüchen gekennzeichnet.

In den Zeichnungen sind Ausführungsbeispiele der Erfindung dargestellt, die im nachfolgenden näher beschrieben sind.
- Figur 1: zeigt in perspektivischer bzw. Explosions-Darstellung eine erfindungsgemäße Zentraleinheit.
- Figur 2: zeigt in perspektivischer bzw. Explosions-Darstellung ein weiteres Ausführungsbeispiel der erfindungsgemäßen Zentraleinheit.

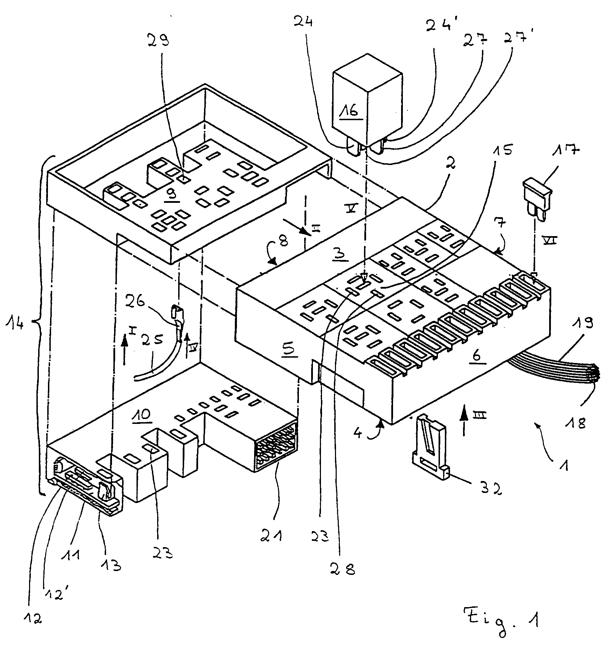

Die Zentraleinheit 1 in Figur 1 setzt sich zusammen aus einem kastenförmigen Grundkörper 2 aus elektrisch isolierendem Material mit einer Oberseite 3, mit einer Unterseite 4 und mit Seitenwänden 5 bis 8. In den Grundkörper 2 sind zwei Teilträgerkörper 9 und 10 einsetzbar. Der Teilträgerkörper 10 ist mit einer gedruckten Schaltungskarte 11 bestückt, auf der Elektronikbauteile 12, 12' und Steckbuchsen 13 befestigt sind. Die Teilträgerkörper 9 und 10 sind nach Art von Puzzle-Teilen geometrisch unterschiedlich im Umriss ausgebildet, so daß sie nur in einer Lage zueinander zusammensetzbar sind und als Trägerkörper 14 in den Grundkörper 2 eingeschoben werden. Erst durch das Zusammensetzen der Teilträgerkörper 9 und 10 zu einem Trägerkörper 14 ergibt sich ein komplettes Kontaktsteckbild 15 eines elektrischen Bauteiles, z. B. eines Relais 16 oder einer Sicherung 17. Unterhalb des Grundkörpers 2 verbleibt ein Zwischenraum zur Aufnahme von Leitungen 18 eines Kabelbaumes 19. Die Leitungen 18 sind an ihren Enden mit Steckbuchsen (nicht dargestellt) versehen und in einem Stecker 20 zusammengefaßt, der in einen komplementären Gegenstecker 21 des Teilträgerkörpers 10 geschoben wird. Die Kontaktierung der gedruckten Schaltungskarte 11 in dem Teilträgerkörper 10 mit elektrischen Bauteilen 16, 17 erfolgt im zusammengesetzten Zustand der Zentraleinheit 1 über Durchgangsöffnungen 22 und 23 in der Oberseite 3 des Grundkörpers 2 und des Teilträgerkörpers 10. Die Elektronik wird ausschließlich z. B. von den Anschlüssen 24 und 24' des Relais 16 kontaktiert, die niedrig belastet sind.

Einzelne Leitungen 25 eines nicht dargestellten Kabelbaumes werden mit ihren Steckbuchsen 26 von unten in Durchgangsöffnungen des Teilträgerkörpers 9 eingeschoben und verrastet. Sie dienen zum Anschluß von Leitungskontakten von steckbaren Bauteilen, die über Steckzungen 27, 27' durch Öffnungen 28 und 29 in den Grundkörper 2 und den Teilträgerkörper 9 einsteckbar sind. Dabei umfaßt der Teilträgerkörper 9 im Inneren auch Strombrücken (nicht dargestellt) zwischen zwei Steckzungen.

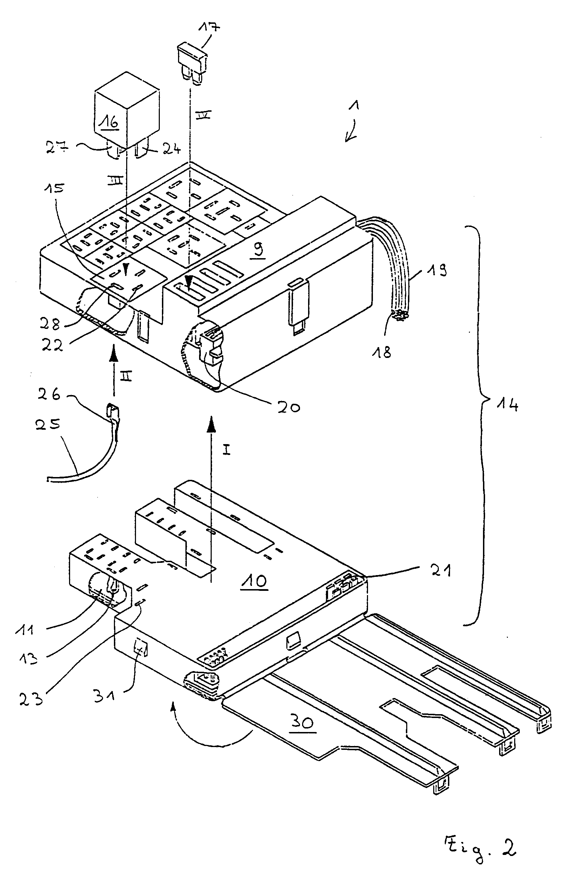

In Figur 2 ist ein weiteres Ausführungsbeispiel der Zentraleinheit 1 gezeigt. Hier bilden zwei zusammensetzbare Teilträgerkörper 9 und 10 einen Trägerkörper 14, der gleichzeitig den Grundkörper 2 darstellt. Die Funktionen des Teilträgerkörpers 9 und des Grundkörpers 2 aus der Figur 1 werden in einem Teilträgerkörper 9 zusammengefaßt, so daß die Anzahl der Bauteile der Zentraleinheit 1 verriegelt wird. Eine am Teilträgerkörper 10 angelenkte Bodenklappe 30 ermöglicht den Einbau der gedruckten Schaltungskarte 11.

Die Teilträgerplatten 9 und 10 können untereinander oder mit den Seitenwänden 5 bis 8 des Grundkörpers 2 über lösbare Verbindungsmittel, wie Rasten 31, erst- und/oder zweitverriegelt sein. Zwischen dem Trägerkörper 14, aus den Teilträgerkörpern 9 und 10 zusammengesetzt, und dem Grundkörper 2 sind zum leichten und kontrollierten Zusammenbau der Zentraleinheit 1 Hilfsmittel, wie z.B. ein Schieber 32, der über Nut und Feder geführt wird, vorgesehen. Numerierte Pfeile zeigen die Reihenfolge des Zusammenbaus der Zentraleinheit.

### Bezugszeichenliste

- 1: Zentraleinheit
- 2: Grundkörper
- 3: Öberseite
- 4: Unterseite
- 5: Seitenwand
- 6: Seitenwand
- 7: Seitenwand
- 8: Seitenwand
- 9: Teilträgerkörper
- 10: Teilträgerkörper
- 11: Schaltungskarte
- 12,12': Elektronikbauteile
- 13: Steckbuchse, -plätze
- 14: Trägerkörper
- 15: Kontaktbild
- 16: Relais
- 17: Sicherung
- 18: Leitung
- 19: Kabelbaum
- 20: Stecker
- 21: Gegenstecker
- 22: Durchgangsöffnung
- 23: Durchgangsöffnung
- 24,24': Anschlüsse
- 25: Leitung
- 26: Steckkontakt
- 27,27': Steckzungen, Leistungsanschlüsse
- 28: Öffnung
- 29: Öffnung
- 30: Bodenklappe
- 31: Raster
- 32: Schieber

## Patentansprüche

1. Zentraleinheit für die Verdrahtung von Kraftfahrzeugen mit einem isolierenden Trägerkörper (14) zur Aufnahme von mit elektrischen Leitungen (25) verbundenen Steckkontakten (26) von unten, wobei der Trägerkörper (14) aus zwei oder mehreren Teilträgerkörpern (9, 10) besteht, die miteinander von einem Grundkörper (2) umfaßt sind oder miteinander einen Grundkörper (2) bilden, und mit von oben in den Trägerkörper (14) und/oder dem Grundkörper (2) einsteckbaren elektrischen Bauteilen (16, 17), wobei sich ein Kontaktsteckbild (15) eines elektrischen Bauteils (16, 17) durch das Zusammenfügen von mindestens zwei Teilträgerkörpern (9, 10) ergibt, dadurch gekennzeichnet, daß in mindestens einem Teilträgerkörper (9) die Anschlüsse (27) derart angeordnet sind, daß sie gegenüber den Anschlüssen (24) des anderen Teilträgerkörpers (10) unterschiedliche, sowohl räumlich als auch elektrisch getrennte Leistungsebenen bilden.

2. Zentraleinheit nach Anspruch 1, dadurch gekennzeichnet, daß in mindestens einem Teilträgerkörper (9) ausschließlich Anschlüsse (27) einer Leistungsebene angeordnet sind.

3. Zentraleinheit nach einem der Ansprüche 1 oder 2, dadurch gekennzeichnet, daß in mindestens einem Teilträgerkörper (10) ausschließlich eine gedruckte Schaltungskarte (11) angeordnet ist, die eine Anzahl von Steckplätzen (13) für eine niedrige Leistungsebene aufweist.

4. Zentraleinheit nach den Ansprüchen 2 und 3, dadurch gekennzeichnet, daß ein elektrisches Bauteil (16) eine elektrische Verbindung zwischen den Teilträgerkörpern (9, 10) darstellt.

5. Zentraleinheit nach einem der Ansprüche 1 bis 4, dadurch gekennzeichnet, daß der Trägerkörper (14) nach Art einer Schublade in den Grundkörper (2) eingeschoben wird.

6. Zentraleinheit nach einem der Ansprüche 1 bis 5, dadurch gekennzeichnet, daß die Teilträgerkörper (9, 10) der Trägerkörper (14) und der Grundkörper (2) mit komplementären Rastvorrichtungen (31) für eine Erst- und/oder Zweitverriegelung zwischeneinander ausgebildet sind.

7. Zemtraleinheit nach Anspruch 6, dadurch gekennzeichnet, daß die Erst- und/oder Zweitverriegelung mit einem Schieber (32) erfolgt.

## Claims

1. A central unit for the wiring of motor vehicles, having an insulating carrying member (14) for receiving, from below, plug contacts (26) connected to electric lines (25), wherein the carrying member (14) comprises two or more sub-carrying members (9, 10) which together are surrounded by a basic body (2) or together form a basic body (2), and having electrical components (16, 17) insertable from above into the carrying member (14) and/or the basic body (2), wherein a contact plug pattern (15) of an electrical component (16, 17) is produced by joining together at least two sub-carrying members (9, 10), characterised in that the contacts (27) are arranged in at least one sub-carrying member (9) in such a manner that, with respect to the contacts (24) of the other sub-carrying member (10), they form different output planes isolated both spatially and electrically.

2. A central unit according to claim 1, characterised in that only contacts (27) of one output plane are arranged in at least one sub-carrying member (9).

3. A central unit according to one of claims 1 and 2, characterised in that only one printed circuit board (11) is arranged in at least one sub-carrying member (10) and has a number of plug-in positions (13) for a low output plane.

4. A central unit according to claims 2 and 3, characterised in that an electrical component (16) produces an electrical connection between the sub-carrying members (9, 10).

5. A central unit according to one of claims 1 to 4, characterised in that the carrying member (14) is pushed into the basic body (2) in the manner of a drawer.

6. A central unit according to one of claims 1 to 5, characterised in that the sub-carrying member (9, 10), the carrying member (14) and the basic body (2) are formed with complementary locking devices (31) for primary and/or secondary interlocking.

7. A central unit according to claim 6, characterised in that primary and/or secondary interlocking is effected by a slide (32).

## Revendications

1. Unité centrale pour le câblage de véhicules automobiles avec un corps de support isolant (14) destiné à recevoir des fiches mâles (26) raccordées aux conducteurs électriques (25) par le bas, le corps de support (14) étant constitué par deux ou plus de deux parties de corps de support (9, 10), qui sont renfermées dans un corps principal (2) ou forment l'un l'autre un corps principal (2), et avec des composants électriques enfichables (16, 17) par le haut dans le corps de support (14) et/ou dans le corps principal (2), permettant ainsi d'obtenir un circuit de connexion enfichable (15) d'un composent électrique (16, 17), par l'assemblage d'au moins deux parties de corps de support (9, 10), caractérisée en ce que dans au moins une partie de corps de support (9) sont disposées les connexions (27) de façon à former, en regard des connexions (24) de l'autre partie de corps de support (10), des niveaux de puissance différents séparés aussi bien spatialement qu'électriquement.

2. Unité centrale selon la revendication 1, caractérisée en ce que dans au moins une partie de corps de support (9) sont disposées exclusivement les connexions (27) d'un plan de puissance.

3. Unité centrale selon l'une des revendications 1 ou 2, caractérisée en ce que dans au moins une partie de corps de support (10) est disposés exclusivement une carte de circuits imprimés (11), qui comporte un certain nombre d'emplacements enfichables (13) pour un plan de puissance inférieur.

4. Unité centrale selon les revendications 2 et 3, caractérisée en ce qu'un composant électrique (16) représente une liaison électrique entre les parties de corps de support (9, 10).

5. Unité centrale selon l'une des revendications 1 à 4, caractérisée en ce que le corps de support (14) s'encastre à la manière d'un tiroir dans le corps principal (2).

6. Unité centrale selon l'une des revendications 1 à 5, caractérisée en ce que la partie de corps de support (9, 10) des corps de support (14) et des corps de base (2) sont formées de dispositifs d'enclenchement complémentaires (31) pour un premier et/ou un second verrouillage entre eux.

7. Unité centrale selon la revendication 6, caractérisée en ce que le premier et/ou le second verrouillage s'effectue par un coulisseau (32).
